# EUROPEAN PATENT SPECIFICATION

(11) **EP 1 029 026 B1**
(45) Date of publication and mention of the grant of the patent: **10.10.2001**
(21) Application number: 98954582.7
(22) Date of filing: 13.11.1998
(51) Int. Cl.: C10L 1/18, C10L 1/14, C10L 10/00

(54) **FUEL COMPOSITION AND BLEND**
BRENNSTOFFZUSAMMENSETZUNG UND MISCHUNG
COMPOSITION DE CARBURANT ET MELANGE

(30) Priority: 13.11.1997 GB 9723866; 25.07.1998 GB 9816165; 06.11.1998 WO PCT/GB98/03332
(43) Date of publication of application: 23.08.2000
(73) Proprietor: BP OIL INTERNATIONAL LIMITED, London EC2M 7BA (GB)
(72) Inventor: TAYLOR, Spencer Edwin, Camberley, Surrey GU15 1DW (GB)
(74) Representative: Hymers, Ronald Robson
(86) International application number: GB9803418
(87) International publication number: WO9925793

(56) References cited:
- EP-A- 0 461 554
- EP-A- 0 786 661
- WO-A-97/31698
- US-A- 4 098 708
- US-A- 4 617 336

## Description

The present invention concerns a fuel composition especially an aviation fuel composition or fuel composition for combustion, and a blend for use therein.

In high speed aircraft, both civilian and military, the liquid fuel is combusted to produce power, but also is circulated in the aircraft as a heat exchange fluid to remove the excess heat generated at such speeds e.g. in lubricating oils. The fuel is thus maintained for long periods at high temperatures, which results in discoloration and decomposition to produce soluble coloured products and insoluble products such as gums, sediments and granular material; insoluble products can form deposits that reduce the heat exchange capacity and can block filters potentially causing loss of power. Soluble coloured by-products are unsightly and an indication of some decomposition. The cause of discoloration etc. may be from phenols, naphthenates and sulphur compounds and/or metals which are often present in the fuels.

In some oil fired devices, such as boilers and slow heating cookers, e.g. of the Aga type, kerosine oil fuel is passed down a narrow metal feed pipe to the combustion chamber where it is burnt. Parts of the pipe are sufficiently near the hot chamber for them to be heated to significant temperatures, resulting in the risk of thermal degradation of the fuel in the pipe, especially with slow feed rates and high residence times in the pipe. This degradation can form solid deposits which reduce the flow and ultimately stop it, causing the combustion to stop. To overcome this manufacturers of such devices have for many years recommended to their users that at least once each 6 months such pipe parts are cleaned of solid deposits of coke or other materials.

USP5478367 describes the addition to diesel or jet fuel of a substituted unsaturated polyamine derivative dispersant to reduce particulate emissions on combustion and to reduce fouling i.e. deposition of insoluble deposits. The macrocyclic compounds preferably contain an N=C-N-C=O group and especially have fused rings, such as are made by reaction of a hydrocarbyl (e.g. fatty alkyl) succinic anhydride and a polyalkylene amine.

Canadian Patent Publ. 2067907 describes the addition to distillate jet fuels of hydroxylamines to stabilise them against degradation at elevated temperatures.

USP5468262 describes addition to jet fuels of thermal stability additives which are prepared by reacting a polyamine, aldehyde and phenol to form a condensate which is then reacted with a succinic anhydride containing a polyolefin derived unsaturated group. The additives are effective at 0.2% by weight.

EP-A-678568 describes addition to jet engine fuels of anti deposition agents which are derivatives of (thio)phosphonic acids.

There have now been discovered improved thermal stabilising additives for fuels comprising kerosine and jet fuels which are oil soluble macromolecules comprising a hydroxy-carboxylic acid functionality.

Accordingly the present invention provides a fuel composition which comprises kerosine and/or is a jet fuel, and also comprises a cyclic compound comprising m units of the formula 1a. 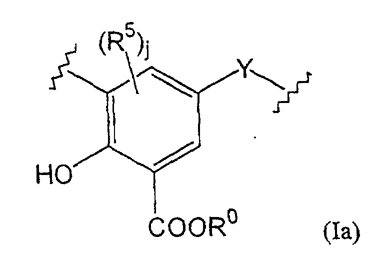 and n units of the formula (Ib) 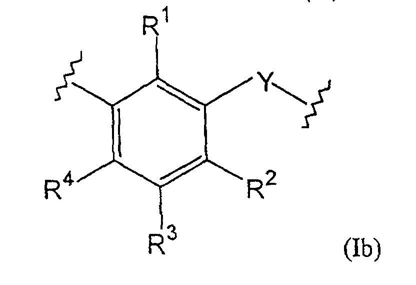 joined together to form a ring,
wherein
Y is a divalent bridging group which may be the same or different in each unit;
R⁰ is H or (C₁-C₆) alkyl; R⁵ is H or (C₁-C₆₀) alkyl; and j is 1 or 2;
R³ is hydrogen, a hydrocarbyl or a hetero-substituted hydrocarbyl group;
each of R¹, R² and R⁴, which may be the same or different, is hydroxyl, hydrogen, hydrocarbyl or hetero-substituted hydrocarbyl, with the proviso that at least one of R¹, R², R⁴ is hydroxyl, and m + n is 4 to 20, m is 1-8 and n is at least 3 and preferably either R¹ is hydroxyl and R² and R⁴ are independently either hydrogen, hydrocarbyl or hetero-substituted hydrocarbyl, or R² and R⁴ are hydroxyl and R¹ is either hydrogen, hydrocarbyl or hetero-substituted hydrocarbyl;
and m + n is from 4 to 20, m is from 1 to 8 and n is at least 3.
The cyclic compound is preferably a compound of the formula (I) with a ring structure. 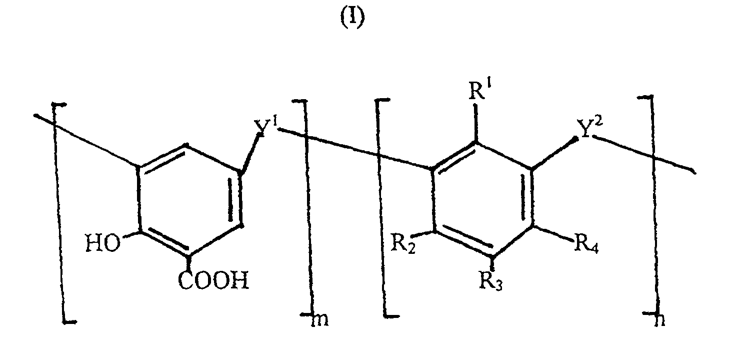 wherein Y¹ and Y² are divalent bridging groups, which may be the same or different; R³ is hydrogen, a hydrocarbyl or a hetero-substituted hydrocarbyl group; each of R¹, R² and R⁴_{,} which may be the same or different, is hydroxyl hydrogen, hydrocarbyl or hetero-substituted hydrocarbyl, with the proviso that at least one of R¹, R², R⁴ is hydroxyl, and m + n is 4 to 20, m is 1-8 and n is at least 3.

When more than one salicylic acid unit is present in the ring (i.e. m > 1), the salicylic acid and phenol units may be distributed randomly, although this does not exclude the possibility that in some rings there may be several salicylic acid units joined together in a row. Thus the m and n units may be joined in block and/or randomly.

In the formula I Y¹ and Y² may each independently be a hydrocarbyl bridging group or be a hetero-substituted hydrocarbyl group or up to 50% mole of the totality of Y¹ and Y² group may be a hetero atom. The hydrocarbyl bridging group is preferably aliphatic and has a chain of 1-4 carbon atoms; preferably the group is of formula (CR⁷R⁸)_{d} e.g. (CHR⁸)d where each of R⁷ and R⁸, which may be the same or different, represents hydrogen or hydrocarbyl e.g. of 1-6 carbons, such as methyl or ethyl and d is an integer of 1-4 preferably 2 or especially 1; advantageously the group is of formula (CHR⁸)_{d} where R⁸ is as defined above preferably methyl or especially hydrogen. Y¹ and/or Y² may also represent a hetero-substituted hydrocarbyl group with a hetero atom, e.g. O, S or NH interrupting a chain of carbon atoms e.g. 2-4 carbon atoms, such as in CH₂OCH₂, CH₂SCH₂ or CH₂NHCH₂. Up to 50 mole% of the totality of Y¹ and Y² groups may be a hetero atom e.g. O or NH or especially S, e.g. 1-50 mole% especially 8-20 mole% of said groups. Preferably Y¹ and Y² are hydrocarbyl groups, and the compound of formula I is sulphur free.

Each of R¹, R² and R⁴ represents hydroxyl, hydrogen, hydrocarbyl or hetero-substituted hydrocarbyl with the proviso that at least one of R¹, R² and R⁴ represents hydroxyl. Thus all three may represent hydroxyl as in a phloroglucinol derivative, or two as in a resorcinol derivative (i.e. the compound of formula I contains a resorcinarene group), or one as in a phenol derivative. Preferably either R¹ is hydroxyl and R² and R⁴ are independently either hydrogen (which is preferred), hydrocarbyl or hetero-substituted hydrocarbyl, or R² and R⁴ are hydroxyl and R¹ is either hydrogen, hydrocarbyl or hetero-substituted hydrocarbyl.

Regarding R¹ to R⁵ and R⁸, the term "hydrocarbyl" includes (C₁-C₆₀) alkyl such as t-butyl, t-amyl, s-butyl, isopropyl, octyl, nonyl, dodecyl and octadecyl. Alternatively the hydrocarbyl group may be derived from a polyolefin, for example polyethylene, polypropylene, polybutylene or a polyolefin copolymer, for example an ethylene/propylene copolymer, preferably derived from a polyisobutene. Alternatives include isoprene-butadiene, styrene-isoprene or styrene-butadiene block copolymers such as those disclosed in WO 96/40846, or ethylene-propylene and ethylene-butene-1 copolymers having molecular weights from 1500 to 2500 or 7500, as disclosed in US 5567344 and US 5578237. Mixtures of all the above may also be employed. Any hetero-substituted hydrocarbyl group has the heteroatom, preferably -O- or = NH, interrupting a chain of carbon atoms, such as an alkoxyalkyl group of 2-20 carbons. Each of R¹-R⁵ may otherwise be as described for R³ below.

The hydrocarbyl group for R¹, R² or R⁴ usually has 1-14 e.g. 1-6 carbons and is preferably saturated, especially an alkyl group e.g. methyl, ethyl, propyl, butyl or hexyl group. The hetero-substituted hydrocarbyl group has at least one e.g. 1-3 especially 1 hetero atom e.g. O, S or NH interrupting a chain of carbon atoms e.g. 2-20, or 2-6 carbons as in an alkoxy alkylene group such as ethoxy ethyl.

R³ is hydrogen, hydrocarbyl or a hetero-substituted hydrocarbyl group. Preferably R³ is hydrocarbyl or a hetero-substituted hydrocarbyl in at least R³ group in the compound of formula 1, especially with n such groups in the molecule. The hydrocarbyl group may be alkyl, alkenyl, cycloalkyl, aryl, aralkyl and contains at least 1 especially at least 4 or at least 8 carbon atoms e.g. 4-40 carbons in particular with 8-20 carbons in a chain. Preferred are linear or branched alkyl e.g. of 8-24 or 8-20 carbons, such as decyl, dodecyl, tetradecyl, hexadecyl, octadecyl, lauryl, myristyl, stearyl, palmityl, propylene tetramer or alkenyl e.g. of 6-24 carbons such as oleyl, or cycloalkyl e.g. of 5-8 carbons such as cyclohexyl, aryl e.g. of 6-24 carbons such as phenyl, tolyl and alkylphenyl with 6-16 carbons in the alkyl e.g. dodecylphenyl and aralkyl e.g. of 7-26 carbons such as benzyl and alkyl substituted benzyl with 6-16 carbons in the alkyl e.g. dodecyl benzyl. R³ may also represent a polymeric hydrocarbyl group e.g. from a polyolefin group, especially from one or more olefins of 2-6 carbons such as ethylene, propylene, butene, isobutene; the polymeric groups may be from polyethylene, polypropylene, polybutene, an ethylene propylene copolymer or polyiso butene (which is preferred). Molecular weights of polymeric R³ groups may be 300-6000 e.g. 500-2000. In the compound of formula I, there may be different R³ groups in the same molecule.

In the compound of formula I, m is from 1 to 8 e.g. 1-4 especially 2 or in particular 1, while n is at least 3 e.g. 3-10, in particular 5-9 especially 6-8. The sum of m + n is 4-20, preferably 5-10 in particular 7-9, e.g. 6 or 8, or a mixture of compounds with m+n having the value of 6 and 8. Preferably m is 1 and m+n is 5-10.

In preferred salixarenes Y, Y¹ or Y² is CH₂; R¹ is hydroxyl; R² and R⁴ are independently either hydrogen, hydrocarbyl or hetero-substituted hydrocarbyl; R³ is either hydrocarbyl or hetero-substituted hydrocarbyl; R⁰ is H; R⁵ is hydrogen or an alkyl group of 6 to 50 carbon atoms, preferably 4 to 40 carbon atoms, more preferably of 6 to 25 carbon atoms; j is 2 or preferably 1; and m + n has a value of at least 5, preferably at least 6, typically at least 8, where m is 1 or 2, preferably 1.

More preferably R² and R⁴ are hydrogen; R³ is hydrocarbyl, preferably alkyl of greater than 4, preferably greater than 9 carbon atoms; R⁵ is hydrogen; and m + n is from 6 to 12; m is 1 or 2.

In preferred compounds, R² and R⁴ are hydrogen, m is 1 or 2, n is 5, 6 or 7, m + n is 6 and/or 8, R¹ is hydroxyl, R³ is alkyl of 8-20 carbons e.g. dodecyl or octadecyl, or polyisobutenyl.

For convenience the compounds of formula I are herein referred to as "salixarenes".

For a review of calixarenes the reader is referred to 'Monographs in Supramolecular Chemistry' by C David Gutsche, Series Editor - J Fraser Stoddart, published by the Royal Society of Chemistry, 1989. Calixarenes having a substituent hydroxyl group or groups include homocalixarenes, oxacalixarenes, homooxacalixarenes and heterocalixarenes.

Salixarenes may be made by reacting together appropriate amounts of the optionally substituted salicylic acid (or carboxylic ester), an optionally substituted phenol, and a carbonyl compound which is preferably an aldehyde e.g. formaldehyde, or acetaldehyde, in the presence of a base and optionally a catalyst. The reaction may be performed in the presence of sulphur if the compound of formula I is to contain combined sulphur.

The salixarenes may be made by a process comprising reacting together in a solvent at 50 weight % dilution or greater, in the presence of a basic catalyst, compounds of the formulas (IIa) and (IIb) 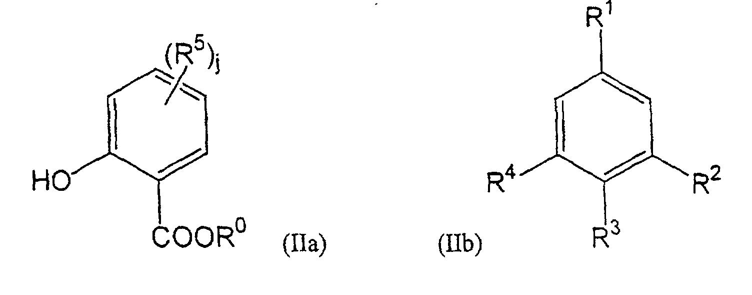 with an aldehyde of the formula O=CHR⁶, and optionally sulphur, where R⁰ to R⁶ and j are as defined previously. By "50 weight % dilution" is meant that the solvent comprises at least 50 % by weight of the reaction solution once all the reactants have been added. Preferably the solvent comprises at least 80% and more preferably at least 90 % by weight of the reaction solution.

Preferred basic catalysts are alkali metal hydroxides such as sodium hydroxide, potassium hydroxide and lithium hydroxide. Sodium hydroxide is most preferred.

High dilution of the reaction mixture is necessary in order to ensure the formation of rings rather than linear molecules; at dilutions well below 50 weight % only linear molecules are formed. However even at high dilutions a proportion of the product may comprise linear molecules. Linear molecules are also composed of units having formulas (Ia) and (Ib) except that instead of the ends of the molecule being joined to form a ring, each end has a terminal group which is independently one of the following:

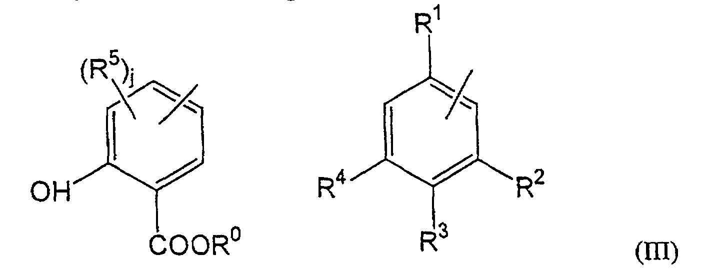

In the linear molecule the total number of units m + n is from 2 to 20, m is from 1 to 8 and n is at least 1. A further aspect of the invention provides the product of reacting compounds of the formulas (IIa) and (IIb) above with an aldehyde of the formula O=CHR⁶, and optionally sulphur; where R⁰ to R⁶ are as defined previously, which reaction product comprises at least 20 % by weight of a cyclic compound comprising units of formulas (Ia) and (Ib) and no more than 80% of the linear version of said compound. Preferably the cyclic form comprises at least 40 %, more preferably at least 60 % and most preferably at least 80 % by weight of the reaction product.

The fuel composition e.g. jet fuel composition may also contain a non ring i.e. linear form of the compound of formula 1a/1b I, i.e. with structural units as shown in the Formulae I but terminated usually by the phenol and/or salicylic acid units.

The present invention also provides the use of at least one of these "salixarenes" to reduce the discoloration on heating of jet fuel compositions and fuel compositions comprising kerosine.

The preferred additive is dodecyl-salicylic calix[8]arene, which is a 1 Salix[8]arene comprising 7 dodecyl substituted phenolic units and one salicylic acid unit joined by methylene bridges, e.g. as present in the reaction product of compound A hereafter. Another preferred compound is a salixarene with 2 salicylic groups and 6 dodecylphenol units.

The additive may be present in the composition in amount of at least 1 at least 5ppm, such as 1-1000, 5-1000 e.g. 5-500 especially 5-200 or 10-100ppm based on the weight of the composition e.g. the jet fuel composition. The additive may be mixed with the jet or other fuel composition in the form of a concentrate in solution, e.g. in an aliphatic aromatic hydrocarbon in 20-80% w/w solution, or it may be added as such to give a solution in the fuel. More than one of the salixarenes may be present e.g. 2-4, especially differing only in the values of at least one of m and n, especially n.

The composition can comprise jet fuel. The composition can comprise kerosine, in particular in jet fuel. The main component of the jet fuel itself is usually a middle boiling distillate boiling point in the range 150-250°C at atmospheric pressure and the fuel is usually kerosine which may be mixed with gasoline and optionally light petroleum distillate as in mixtures of gasoline and kerosene. The jet fuel may comprise mixtures of gasoline and light petroleum distillate, e.g. in weight amounts of 20-80:80-20 such as 50-75:50-25 which weight amounts may also be used for mixtures of gasoline and kerosene. The jet fuels for military use are designated JP4 to 8 e.g. JP4 as 65% gasoline/35% light petroleum distillate (according to US Mil. Spec. (MIL 5624G)), JP5, similar to JP4 but of higher flash point, JP7, a high flash point special kerosene for advanced supersonic aircraft and JP8, a kerosene similar to Jet A1(according to MIL 83133C). Jet fuel for civilian use is usually a kerosene type fuel and designated Jet A or Jet A1. The jet fuel may have a boiling point of 66-343°C or 66-316°C (150-650°F e.g. 150 - 600°F), initial boiling point of 149-221°C, e.g. 204°C (300-430°F, e.g. 400°F), a 50% boiling point of 221-316°C (430-600°F) and a 90% boiling point of 260-343°C (500-650°F) and API Gravity of 30-40. Jet fuel for turbojet use may boil at 93-260°C (200-500°F) (ASTM D1655-59T). Further details on aviation fuels may be obtained from "Handbook of Aviation Fuel Properties", Coordinating Research Council Inc., CRC Report No. 530 (Society of Automotive Engineers Inc., Warrendale, PA, USA, 1983) and on US military fuels, from "Military Specification for Aviation Turbine Fuels", MIL-T-5624P.

The jet fuel may be the straight run kerosene optionally with added gasoline, but preferably has been purified to reduce its content of components contributing to or encouraging formation of coloured products and/or precipitates. Among such components are aromatics and olefins and mercaptans. Thus the fuels may be purified to reduce their mercaptan content e.g. Merox fuels and copper sweetened fuels or to reduce their sulphur content e.g. hydrofined fuels or Merifined fuels. Merox fuels are made by oxidation of the mercaptans and have a low mercaptan S content (e.g. less than 0.005% wt S) such as 0.0001-0.005% but a higher disulphide S content (e.g. at most 0.4% or at most 0.3% wt S such as 0.05-0.25 e.g. 0.1-2%); their aromatic (e.g. phenolics) and olefins content are hardly changed. Hydrofined jet fuels are ones in which the original fuel has been hydrogenated to remove at least some of sulphur compounds e.g. thiols and under severe conditions to saturate the aromatics and olefins; hydrofined jet fuels have very low sulphur contents (e.g. less than 0.01% S by weight). Merifined fuels are fuels that have been extracted with an organic extractant to reduce or remove their contents of sulphur compounds and/or phenols. The jet fuel may also contain metals, either following contact with metal pipes or carried over from the crude oil; examples of such metals are copper, nickel, iron and chromium usually in amounts of less than 1 ppm e.g. each in 10-150 ppb amounts. Merox and hydrofined fuels are preferred and may be used in JP 4-8 jet fuels.

The fuel comprising kerosine may also be a fuel for combustion especially for non motive purposes, e.g. power generation, steam generation, and heating, especially for use in buildings and for cooking, e.g. as described above. The fuel is particularly suitable for the devices e.g. boilers and slow cookers as described above in which there is localised preheating of the fuel before it is combusted. Such fuels are known as burning kerosine and may have the same physical properties as the kerosine based jet fuels described above, e.g. straight run kerosine, or kerosine modified to reduce its content of at least one of aromatics, olefins and sulphur compounds, as described above. The fuel may also contain metals as described above.

The fuel compositions of the invention contains the cyclic compound of formula 1a/1b or I and may also contain at least one conventional additive e.g. for jet fuels or burning fuels such as an antioxidant, corrosion inhibitor, dispersant/detergent, (in particular in the case of hydroxy carboxylic acids (see below)), especially in amounts each of 1-1000ppm, e.g. 20-200ppm. The "salixarene" additives of formula I may be present in the composition especially with a dispersant; the dispersant is in particular one for solids known for use in fuels e.g. automotive burning or aviation fuels. Such dispersants usually have a polymeric carbon backbone with pendant groups containing nitrogen, which may be primary, secondary or tertiary, in cyclic or acyclic systems, and especially in amine, amide or imide groupings, in particular cyclic imide groups. The dispersants may also contain 1-5 polymer chains which are bridged by the nitrogen containing groups. Examples of such dispersants are the reaction products of polyisobutene succinic anhydride (PIBSA) and polyamines. Such dispersants are known compounds for dispersing particles of in non aqueous systems e.g. hydrocarbon systems. The weight ratio of "salixarene" to dispersant may be 99:1 to 10:90, especially 30:70 to 70:30. The additives and the fuel composition are preferably substantially ashless. Burning kerosine is usually substantially free of the above additives apart from that of formula I or Ia/Ib.

The fuel compositions of the invention containing the compounds of formula I, Ia, Ib, have an improved thermal stability as shown by a reduced tendency to discolour and/or produce solids on heating compared to the fuel alone (in the isothermal corrosion and oxidation test (ICOT based on ASTM D4871)). In some cases the combination of the compounds of formula I and certain other hydroxy carboxylic acid derivatives imparts to some fuels further improved stability still, better than either additive alone. This synergistic behaviour is found with combinations of the compound of formula I, Ia, Ib and the hydroxycarboxylic acid in Merox fuels.

Thus in a preferred embodiment the invention also provides a blend comprising at least one compound of formula I, Ia, Ib and at least one hydroxy carboxylic acid (different from said compound) with at least one chain of at least 8 carbon atoms. The invention also provides a fuel composition comprising said blend and a fuel comprising kerosine and/or a jet fuel which is a Merox fuel, especially one which has a mean deposit forming tendency in the ICOT test according to ASTM D4871 of 80-120mg deposit per litre of fuel, in particular 80-105mg/l.

In the blend of this invention the weight ratio of the compound (c) of formula I, Ia, Ib to hydroxycarboxylic acid is usually 10-90:90-1, in particular 30-85:70-15 and especially 35-65:65-35. The amount of the blend in the fuel is usually 10-1000ppm e.g. 30-200ppm.

The hydroxycarboxylic acid contains in total at least 1 hydroxyl group e.g. 1-4 such as 2 or 3 but preferably 1 hydroxyl group. It usually contains a hydroxyl group on a carbon atom alpha, beta or gamma to the carbon atom to which the carboxylic acid group is bonded and may optionally have 1 or more hydroxyl groups elsewhere in the molecule: preferably the only hydroxyl group in the molecule is in the alpha, beta or gamma especially the beta position. The hydroxy acid may be of formula, 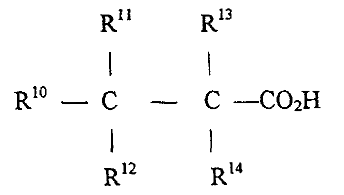 wherein one of R¹¹ and R¹³ represents hydrocarbyl and the other hydrogen or an organic group, each of R¹⁰, R¹² and R¹⁴, which may be the same or different, represents hydrogen or an organic group, bonded via carbon or a heteroatom, which is O, N or S, with the proviso that at least one, and preferably only one of R¹⁰-R¹⁴ represents an organic group containing a carbon chain of at least 8 carbon atoms. Examples of the organic groups, bonded via carbon are alkyl, cycloalkyl, alkenyl, aralkyl or aryl, e.g. as described for R³ above, especially an alkyl group of 8-3000 carbons, in particular 8-24 carbons especially dodecyl, octadecyl, and 50-3000 carbons e.g. polyolefinyl such as from polyisobutene. Examples of the organic group bonded via nitrogen are amino groups with long chain hydrocarbyl group e.g. 8-24 carbons, or amido or imido groups from long chain carboxylic acids with 8-3000 carbons, e.g. 8-24 carbons such as fatty acids e.g. stearic and palmitic acids, or 50-3000 carbons e.g. polyolefinyl such as from a carboxylic derivative from polyisobutene such as PIBSA. In particular R¹¹ preferably represents hydroxyl/or hydrogen, R¹⁰ represents hydrogen or a long chain hydrocarbyl group of at least 8 carbons, especially 8-24 or 50-3000 carbons, R¹² represents hydrogen or alkyl of 1-6 carbons e.g. methyl or ethyl, R¹³ represents hydroxyl or hydrogen and R¹⁴ represents hydrogen or a amino, amido or imido group with a long chain aliphatic group or long chain mono or di acyl group, in particular a long chain succinic imide e.g. PIBSA. Especially R¹⁰ or R¹⁴ contains a long chain aliphatic group but not both. Preferred examples of the hydroxy carboxylic acid are N(long chain acyl) derivatives of beta hydroxy amino acids e.g. serine and threonine and long chain hydrocarbyl alpha hydroxy acids e.g. 1-hydroxy dodecanoic, 1-hydroxypalmitic and 1-hydroxystearic acids, 1-hydroxyl polyiso butenyl-1-carboxylic acid (from PIB aldehyde).

The invention will now be further illustrated by reference to the following

### Examples.

### Compounds

### A. Preparation of dodecyl-salicylic calix[8]arene

A 5 litre flange flask was charged with the following ingredients:234.5g dodecylphenol (0.87 moles, 1 equiv)
17.25g salicylic acid (0.125 moles, 0.152 equivs)
60g paraformaldehyde (2.00 moles, 2.3 equivs)
52.5g 10M sodium hydroxide (40% aqueous) (0.525 moles, 0.63 equiv)
2kg xylene (solvent)

A reaction apparatus was then set up incorporating the 5L flange flask, a flange lid and clip, overhead stirrer with paddle and PTFE stirrer gland, Dean & Stark trap and double surface condenser. The reactor contents were heated by an electric mantle/thermocouple/Eurotherm temperature controller system. The glassware from just above the mantle to just below the condenser was lagged with glass wool.

The reaction mixture was rapidly heated to 90°C, and the temperature then further increased very slowly at a rate of approximately 1°C every 10 minutes. Water (77ml) was collected over a period of 7 hours, at the end of which the temperature had reached 140°C. The mixture was then allowed to cool overnight before being refluxed (139°C) for a further 2.5 hours. 100ml of the resultant brown solution was then separated, and the xylene solvent removed by rotary evaporator. The brown residue was then analysed by GPC which showed the presence of 26% of the 1:7 salicylic:dodecyl ring compound 25% of the 1:5 salicylic:docecyl ring compound and 24-40% of unreacted starting materials as the main components.

### B. N(Polyisobutenyl Succinyl)serine

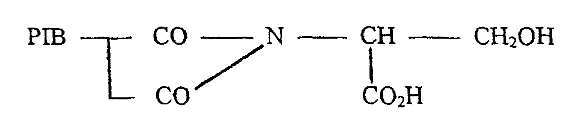

### Example 1-3 Blends

Blends of compounds A and B were made in 75:25, 50:50 and 25:75 weight proportions.

### Jet Fuels

D. Merox
E. USAF POSF 3119 Merox
F. USAF POSF 2926 Merox
G. Merox
H. Hydrofined

The fuels D-H have a mean deposit forming tendency in the ICOT test according to ASTM D4871 respectively of 99.4, 89.4, 74.3, 110.5 and 96 mg deposit litre of fuel.

### ICOT Tests

This is basically as described in ASTM D4871. The test involves thermally treating 100ml of fuel (with and without additives, typically in batches of 4, including base fuel as a control) at 180°C for 5 hours, whilst continuously passing air through the fuel at a constant flow rate of 150 ml min⁻¹. At the end of this test, the fuel is allowed to cool and "rest" for 24 hours before filtering and weighing to ±1 mg any deposits through pre-weighed 0.45 micron Millipore filters. Both filterable sediment and gum deposits are determined, the overall level of deposition being the sum of the two. The results are expressed as % ICOT efficiency being 100 x [Difference in deposit weight of Control - that of sample] ö Deposit wt of Control; the efficiency is thus a measure of how much reduction in deposits are achieved by use of the additives.

**Table 1**

| Fuel | Additive | ppm | ICOT % efficiency |
|---|---|---|---|
| D | B | 100 | 68 |
| D | A | 100 | 85 |
| D | A:B | 75:25 | 97 |
| D | A:B | 50:50 | 97 |
| D | A:B | 25:75 | 93 |

**Table 2**

| Fuel | Additive | ppm | ICOT % efficiency |
|---|---|---|---|
| E | B | 100 | (4) |
| E | A | 100 | 35 |
| E | A:B | 75:25 | 40 |
| E | A:B | 50:50 | 54 |
| E | A:B | 25:75 | 17 |

**Table 3**

| Fuel | Additive | ppm | ICOT % efficiency |
|---|---|---|---|
| F | B | 100 | (4) |
| F | A | 100 | 46 |
| F | A:B | 75:25 | 33 |
| F | A:B | 50:50 | 29 |
| F | A:B | 25:75 | 25 |

**Table 4**

| Fuel | Additive | ppm | ICOT % efficiency |
|---|---|---|---|
| G | B | 100 | 15 |
| G | A | 100 | 69 |

**Table 5**

| Fuel | Additive | ppm | ICOT % efficiency |
|---|---|---|---|
| H | B | 100 | 33 |
| H | A | 100 | 61 |
| H | A:B | 75:25 | 40 |
| H | A:B | 50:50 | 38 |

## Claims

1. A fuel composition comprising a fuel, which comprises kerosine and/or is a jet fuel, and also comprising a cyclic compound comprising m units of the formula 1a 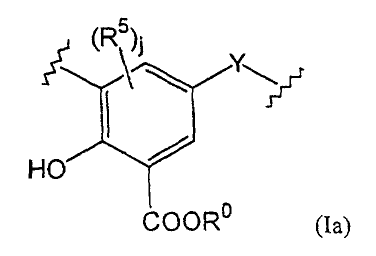 and n units of the formula (Ib) 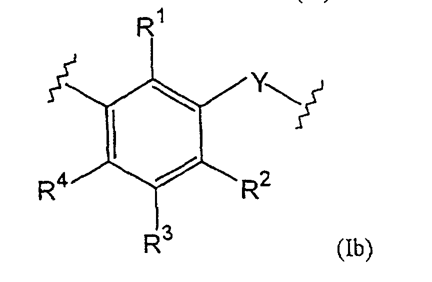 joined together to form a ring,
wherein
Y is a divalent bridging group which may be the same or different in each unit;
R⁰ is H or (C₁-C₆) alkyl; R⁵ is H or (C₁-C₆₀) alkyl; and j is 1 or 2;
R³ is hydrogen, a hydrocarbyl or a hetero-substituted hydrocarbyl group;
each of R¹, R² and R⁴, which may be the same or different, is hydroxyl, hydrogen, hydrocarbyl or hetero-substituted hydrocarbyl, with the proviso that at least one of R¹, R², R⁴ is hydroxyl, and m + n is 4 to 20, m is 1-8 and n is at least 3.

2. A composition according to claim 1, wherein the compound is a compound of the formula (I) with a ring structure. 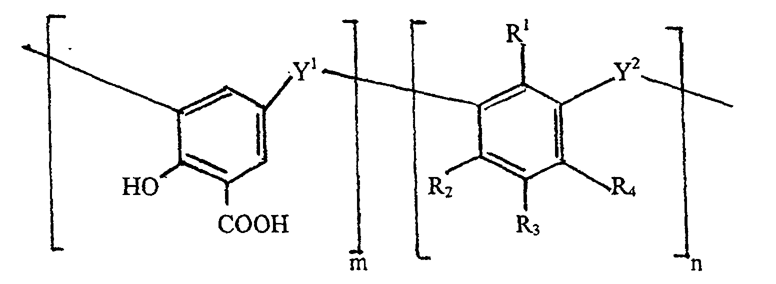 wherein Y¹ and Y² are as defined for Y.

3. A composition according to claim 1 or 2 wherein either R¹ is hydroxyl and R² and R⁴ are independently either hydrogen, hydrocarbyl or hetero-substituted hydrocarbyl, or R² and R⁴ are hydroxyl and R¹ is either hydrogen, hydrocarbyl or hetero-substituted hydrocarbyl.

4. A composition according to claim 3 wherein R¹ is hydroxyl and R² and R⁴ are hydrogen.

5. A composition according to any one of the preceding claims wherein Y, Y¹ and Y² are of formula (CHR⁸)_{d} wherein R⁸ is hydrocarbyl of 1-6 carbons or hydrogen, and d is an integer of 1-4.

6. A composition according to any one of the preceding claims wherein m is 1 and n is an integer of 5-10.

7. A composition according to claim 6 wherein m+n has the value of 6 or 8, or a mixture of compounds with m+n having the value of 6 and 8.

8. A composition according to any one of the preceding claims wherein R³ is a hydrocarbyl group of at least 8 carbon atoms.

9. A composition according to claim 8 wherein R³ is an alkyl group of 8-20 carbons or is a polymeric hydrocarbyl group from polyisobutene.

10. A composition according to any one of the preceding claims wherein R⁵ is hydrogen, and R⁰ (if present) is hydrogen.

11. A composition according to any one of the preceding claims wherein the amount of cyclic compound is 5-1000ppm (based on the weight of the composition).

12. A composition according to any one of the preceding claims wherein the jet fuel is a Merox fuel.

13. A composition according to any one of the preceding claims which also comprises a hydroxycarboxylic acid, different from said compound, and with at least one chain of at least 8 carbons.

14. A composition according to claim 13 wherein the hydroxy carboxylic acid is a beta hydroxy carboxylic acid.

15. A composition according to claim 14 wherein the hydroxy carboxylic acid is an N-substituted serine.

16. A composition according to claim 15 wherein the hydroxy carboxylic acid is a N-(polyisobutenyl succinyl)serine.

17. A composition according to any one of claims 13-16 wherein the cyclic compound and hydroxy carboxylic acid are present in a weight ratio of 30-85:70-15.

18. A composition according to any one of the preceding claims wherein the fuel is a jet fuel.

19. A blend for use in a liquid hydrocarbon fuel, comprising a cyclic compound as defined in any one of claims 1-10 and a hydroxy carboxylic acid as defined in any one of claims 13-17.

20. A method of thermally stabilising a fuel comprising kerosine or a fuel comprising a jet fuel which comprises mixing with said fuel a compound as defined in any one of claims 1-10 or blend as claimed in claim 19.

21. Use of a compound as defined in any one of claims 1-10 or blend as defined in claim 19 to thermally stabilise a fuel comprising kerosine or a jet fuel.

## Patentansprüche

1. Kraftstoffzusammensetzung, umfassend einen Kraftstoff, der Kerosin umfasst und/oder einen Düsenkraftstoff darstellt und ebenfalls umfassend eine cyclische Verbindung, umfassend m Einheiten der Formel (Ia) 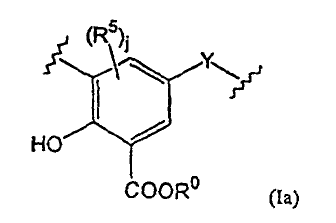 und n Einheiten der Formel (Ib) 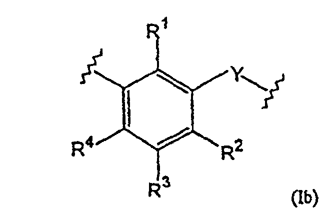 die miteinander verbunden einen Ring bilden,
worin
Y eine zweiwertige Brückengruppe darstellt, die in jeder Einheit gleich oder verschieden sein kann;
R⁰ H oder (C₁-C₆)-Alkyl darstellt; R⁵ H oder (C₁-C₆₀)-Alkyl darstellt und j 1 oder 2 ist;
R³ Wasserstoff, eine Kohlenwasserstoff- oder eine heterosubstituierte Kohlenwasserstoffgruppe darstellt;
wobei jeder der Reste R¹, R² und R⁴, die gleich oder verschieden sein können, Hydroxyl, Wasserstoff, Kohlenwasserstoff oder heterosubstituierten Kohlenwasserstoff darstellt, mit der Maßgabe, dass mindestens einer der Reste R¹, R², R⁴ Hydroxyl darstellt und m + n 4 bis 20 ist, m 1-8 ist und n mindestens 3 ist.

2. Zusammensetzung nach Anspruch 1, worin die Verbindung eine Verbindung der Formel (I) mit einer Ringstruktur ist, 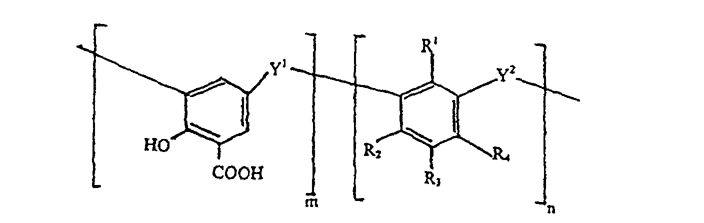 worin Y¹ und Y² wie für Y definiert sind.

3. Zusammensetzung nach Anspruch 1 oder 2, worin entweder R¹ Hydroxyl ist und R² und R⁴ unabhängig voneinander entweder Wasserstoff, Kohlenwasserstoff oder heterosubstituierten Kohlenwasserstoff darstellen, oder R² und R⁴ Hydroxyl darstellen und R¹ entweder Wasserstoff, Kohlenwasserstoff oder heterosubstituierten Kohlenwasserstoff darstellt.

4. Zusammensetzung nach Anspruch 3, worin R¹ Hydroxyl darstellt und R² und R⁴ Wasserstoff darstellen.

5. Zusammensetzung nach einem der vorangehenden Ansprüche, worin Y, Y¹ und Y² Formel (CHR⁸)_{d} aufweisen, worin R⁸ einen Kohlenwasserstoff mit 1-6 Kohlenstoffatomen oder Wasserstoff darstellt und d eine ganze Zahl von 1-4 ist.

6. Zusammensetzung nach einem der vorangehenden Ansprüche, worin m 1 ist und n eine ganze Zahl von 5-10 ist.

7. , Zusammensetzung nach Anspruch 6, worin m+n den Wert 6 oder 8 aufweist oder ein Gemisch von Verbindungen, wobei m+n den Wert von 6 und 8 aufweist.

8. Zusammensetzung nach einem der vorangehenden Ansprüche, worin R³ eine Kohlenwasserstoffgruppe von mindestens 8 Kohlenstoffatomen darstellt.

9. Zusammensetzung nach Anspruch 8, worin R³ eine Alkylgruppe mit 8-20 Kohlenstoffatomen darstellt oder eine polymere Kohlenwasserstoffgruppe von Polyisobuten darstellt.

10. Zusammensetzung nach einem der vorangehenden Ansprüche, worin R⁵ Wasserstoff darstellt und R⁰ (falls vorliegend) Wasserstoff darstellt.

11. Zusammensetzung nach einem der vorangehenden Ansprüche, worin die Menge der cyclischen Verbindung 5-1000 ppm (bezogen auf das Gewicht der Zusammensetzung) beträgt.

12. Zusammensetzung nach einem der vorangehenden Ansprüche, worin der Düsenkraftstoff ein Merox-Kraftstoff ist.

13. Zusammensetzung nach einem der vorangehenden Ansprüche, die ebenfalls eine Hydroxycarbonsäure umfasst, die sich von der Verbindung unterscheidet und mindestens eine Kette mit mindestens 8 Kohlenstoffatomen aufweist.

14. Zusammensetzung nach Anspruch 13, worin die Hydroxycarbonsäure eine β-Hydroxycarbonsäure ist.

15. Zusammensetzung nach Anspruch 14, worin die Hydroxycarbonsäure ein N-substituiertes Serin ist.

16. Zusammensetzung nach Anspruch 15, worin die Hydroxycarbonsäure ein N-(Polyisobutenylsuccinyl)serin ist.

17. Zusammensetzung nach einem der Ansprüche 13-16, worin die cyclische Verbindung und die Hydroxycarbonsäure in einem Gewichtsverhältnis von 30-85:70-15 vorliegen.

18. Zusammensetzung nach einem der vorangehenden Ansprüche, worin der Kraftstoff ein Düsenkraftstoff ist.

19. Gemisch zur Verwendung in einem flüssigen Kohlenwasserstoffkraftstoff, umfassend eine cyclische Verbindung, wie in einem der Ansprüche 1-10 definiert, und eine Hydroxycarbonsäure, wie in einem der Ansprüche 13-17 definiert.

20. Verfahren zur thermischen Stabilisierung eines Kraftstoffs, umfassend Kerosin, oder eines Kraftstoffs, umfassend einen Düsenkraftstoff, das Vermischen des Kraftstoffs mit einer wie in einem der Ansprüche 1-10 definierten Verbindung oder einem Gemisch nach Anspruch 19 umfasst.

21. Verwendung einer Verbindung, wie in einem der Ansprüche 1-10 definiert, oder eines Gemisches, wie in Anspruch 19 definiert, zur thermischen Stabilisierung eines Kraftstoffs, umfassend Kerosin oder einen Düsenkraftstoff.

## Revendications

1. Composition de carburant comprenant un carburant, qui comprend du kérosène et/ou est un carburant pour moteurs à réaction, et qui comprend aussi un composé cyclique comprenant m motifs de formule Ia, 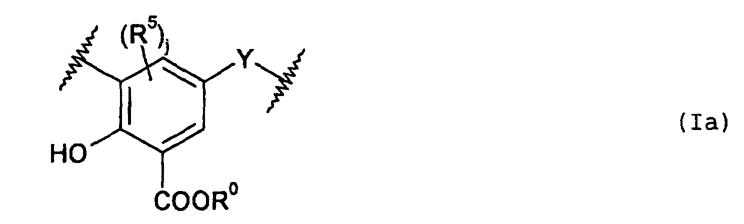 et n motifs de formule (Ib), 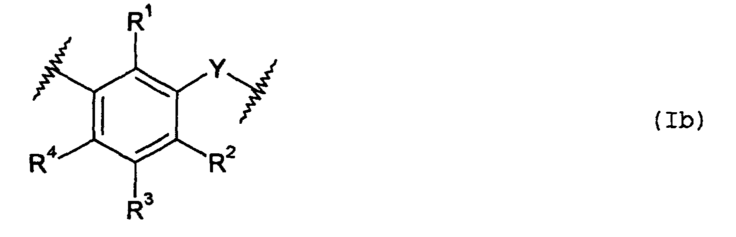 reliés entre eux pour former un cycle,
où
Y est un groupe pontant divalent qui peut être identique ou différent dans chaque motif ;
R⁰ est H ou un radical alkyle en C₁ à C₆ ; R⁵ est H ou un radical alkyle en C₁ à C₆₀ ; et j vaut 1 ou 2 ;
R³ est l'hydrogène ou un groupe hydrocarbyle ou hydrocarbyle hétéro-substitué ;
chacun de R¹, R² et R⁴, qui peuvent être identiques ou différents, est l'hydrogène ou un radical hydroxyle, hydrocarbyle ou hydrocarbyle hétéro-substitué, à la condition qu'au moins l'un de R¹, R² et R⁴ soit un radical hydroxyle, et m + n vaut de 4 à 20, m vaut de 1 à 8 et n vaut au moins 3.

2. Composition selon la revendication 1, dans laquelle le composé est un composé de formule (I) ayant une structure cyclique : 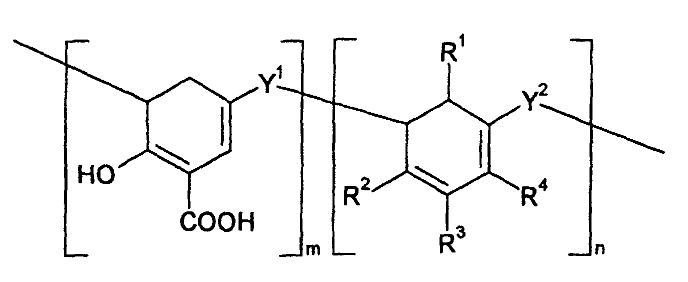 dans laquelle Y¹ et Y² sont tels que définis pour Y.

3. Composition selon la revendication 1 ou 2, dans laquelle soit R¹ est un radical hydroxyle et R² et R⁴ sont indépendamment l'hydrogène ou un radical hydrocarbyle ou hydrocarbyle hétéro-substitué, soit R² et R⁴ sont un radical hydroxyle et R¹ est l'hydrogène ou un radical hydrocarbyle ou hydrocarbyle hétéro-substitué.

4. Composition selon la revendication 3, dans laquelle R¹ est un radical hydroxyle et R² et R⁴ sont 1 'hydrogène.

5. Composition selon l'une quelconque des revendications précédentes, dans laquelle Y, Y¹ et Y² répondent à la formule (CHR⁸)_{d} où R⁸ est un radical hydrocarbyle ayant de 1 à 6 atomes de carbone ou l'hydrogène, et d est un entier de 1 à 4.

6. Composition selon l'une quelconque des revendications précédentes, dans laquelle m vaut 1 et n est un entier de 5 à 10.

7. Composition selon la revendication 6, dans laquelle m + n a la valeur 6 ou 8, ou bien il s'agit d'un mélange de composés où m + n a la valeur 6 et 8.

8. Composition selon l'une quelconque des revendications précédentes, dans laquelle R³ est un groupe hydrocarbyle ayant au moins 8 atomes de carbone.

9. Composition selon la revendication 8, dans laquelle R³ est un groupe alkyle ayant de 8 à 20 atomes de carbone ou est un groupe hydrocarbyle polymère dérivant du polyisobutène.

10. Composition selon l'une quelconque des revendications précédentes, dans laquelle R⁵ est l'hydrogène, et R⁰ (s'il est présent) est l'hydrogène.

11. Composition selon l'une quelconque des revendications précédentes, dans laquelle la quantité de composé cyclique est de 5-1000 ppm (sur la base du poids de la composition).

12. Composition selon l'une quelconque des revendications précédentes, dans laquelle le carburant pour moteurs à réaction est un carburant Merox.

13. Composition selon l'une quelconque des revendications précédentes, qui comprend aussi un acide hydroxycarboxylique, différent dudit composé, et ayant au moins une chaîne d'au moins 8 atomes de carbone.

14. Composition selon la revendication 13, dans laquelle l'acide hydroxycarboxylique est un acide β-hydroxycarboxylique.

15. Composition selon la revendication 14, dans laquelle l'acide hydroxycarboxylique est une sérine N-substituée.

16. Composition selon la revendication 15, dans laquelle l'acide hydroxycarboxylique est une N-(polyisobuténylsuccinyl)sérine.

17. Composition selon l'une quelconque des revendications 13 à 16, dans laquelle le composé cyclique et l'acide hydroxycarboxylique sont présents en un rapport en poids de 30-85/70-15.

18. Composition selon l'une quelconque des revendications précédentes, dans laquelle le carburant est un carburant pour moteurs à réaction.

19. Mélange à utiliser dans un carburant hydrocarboné liquide, comprenant un composé cyclique tel que défini dans l'une quelconque des revendications 1 à 10 et un acide hydroxycarboxylique tel que défini dans l'une quelconque des revendications 13 à 17.

20. Procédé de stabilisation thermique d'un carburant comprenant du kérosène ou d'un carburant comprenant un carburant pour moteurs à réaction, qui comprend le mélange avec ledit carburant d'un composé tel que défini dans l'une quelconque des revendications 1 à 10 ou d'un mélange tel que revendiqué dans la revendication 19.

21. Utilisation d'un composé tel que défini dans l'une quelconque des revendications 1 à 10 ou d'un mélange tel que défini dans la revendication 19 pour la stabilisation thermique d'un carburant comprenant du kérosène ou d'un carburant pour moteurs à réaction.
